Europäisches Patentamt

European Patent Office

Office européen des brevets

(19)

(11) **EP 1 182 799 A2**

(12) **EUROPEAN PATENT APPLICATION**

(43) Date of publication:
**27.02.2002 Bulletin 2002/09**

(51) Int Cl.7: **H04B 7/06**

(21) Application number: **01305500.9**

(22) Date of filing: **25.06.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Shang-Chieh, Liu**<br> **Hsin Chu (TW)**<br>• **Hung-Yao, Yeh**<br> **East Hannover, New Jersey 07936 (US)** |
| (30) Priority: **22.08.2000 US 643562** | (74) Representative:<br>**Buckley, Christopher Simon Thirsk et al**<br>**Lucent Technologies NS UK Limited, Intellectual Property Division, 5 Mornington Road**<br>**Woodford Green, Essex IG8 0TU (GB)** |
| (71) Applicant: **LUCENT TECHNOLOGIES INC.**<br>**Murray Hill, New Jersey 07974-0636 (US)** | |

(54) **Method for enhancing mobile cdma communications using space-time transmit diversity**

(57) A smart antenna applies a space-time transmit diversity scheme to angular and temporary transmit diversity to combine with a polarization interleave switch beam to enhance the downlink wideband code division multiple access performance. The aperture gain is transferred to diversity gain by dividing a different angle of departure with different space-time spreading.

$$W_e = [W_k \ W_k] \qquad pilot \ 1 = [W_p \ W_p]$$
$$W_o = [W_k -W_k] \qquad pilot \ 2 = [W_p -W_p]$$

*FIG. 12*

$$z_1 = A_1 s_e h_1 + A_2 s_o h_2 + n_1$$
$$z_2 = A_1 s_e^* h_2 - A_2 s_o^* h_1 + n_2$$

$$x_1 = (A_1 s_e w_e - A_2 s_o^* w_o + pilot_1) base\_code$$
$$x_2 = (A_1 s_e^* w_o + A_2 s_o w_e + pilot_2) base\_code$$

Rx

Tx

EP 1 182 799 A2

## Description

### Field of the Invention

This invention relates to the field of telecommunications, and more particularly, this invention relates to the field of a Code Division Multiple Access telecommunications system using space-time transmit diversity.

### Background of the Invention

The Universal Mobile Telecommunications Systems (UMTS), one of the third generation wireless proposals, is designed for use with various formats of voice/data services. The demand for data traffic implies a higher throughput rate in the downlink traffic channels rather than in the uplink traffic channels. To improve the downlink capacity of a Wideband Code Division Multiple Access (WCDMA) system, studies and modifications of the physical layer structure of the UMTS in both phased array beamformers and the transmit diversity schemes have been accomplished.

A phased array beamforming approach forms a narrow transmitting beam directed to the desired mobile communication units. An aperture gain of the beamformer improves the downlink systems capacity. As the number of antenna elements is doubled, the coverage beamwidth in azimuth and the interference seen by mobiles is reduced to one-half. As a result, the downlink capacity is doubled. The downlink beamformer aims at the azimuth angle, which is estimated by the uplink processing of the desired mobile. The downlink beamformers can mis-aim in azimuth if downlink physical channels and uplink physical channels are different, e. g., in frequency division duplex (FDD) systems. additionally, downlink beamformers may perform worse than a single transmit antenna if the angle spread of the channels is larger than the 3 dB beamwidth of the beamformer.

To overcome some of these drawbacks, open-loop transmit diversity uses the space-time block code to transmit signals at two diversity antennas. Typically, the mobile can see at least two independent paths from the base station. One advantage of transmit diversity is that it creates diversity gain as compared to a single transmitting antenna. As a result, the received power can be above a certain level at the mobiles. In a slow and flat fading communications environment, the performance improvement of two units transmitting diversity over a single antenna can be as high as 7 dB. It has been found, however, that in a multiple time resolvable arrival environment, the performance improvement of two transmit diversity is diminished by the existing multipath diversity of a single antenna. Performance improvement can be as poor as 3 dB in slow fading channels and only 1 dB in fast fading channels. As is known, the full four-way transmit diversity does not exist. The throughput rate (bit rate) has to be rescued to three-fourths if four-way transmit diversity is achieved.

### Summary of the Invention

The present invention is advantageous and provides a smart antenna, which applies a space-time transmit diversity (STTD) scheme to angular and temporary transmit diversity to combine with the polarization interleaved switch beam (SWB-ATTD) to enhance the downlink wideband Code Division Multiple Access (WCDMA) performance. The angular temporary transmit diversity and polarization interleaved switch beam is specially designed for multiple arrival and wide angle spread (urban) environments. In such an environment, the method of the invention transfers the aperture gain to diversity gain by dividing different angle of departure with different space-time spreading. The proposed switch beamformer preserves the aperture gain in time-resolvable arrival air interface, which is a typical WCDMA channel environment. It is possible to obtain an average 2-3 dB better than the steering space-time diversity and 6 dB superior achievement to single omni-transmit antenna in wide angle spread and rich multipath (urban) environments. The smart antenna of the present invention does not require per user's pilot and transceiver calibration at the base station for implementing beamformers. The interleaved polarization switch beam structure increases receiving diversity in the uplink traffic.

### Brief Description of the Drawings

Other objects, features and advantages of the present invention will become apparent from the detailed description of the invention which follows, when considered in light of the accompanying drawings in which:

FIG. 1 is a chart showing the slot and frame structure for a downlink communication channel and the wideband CDMA system of UMTS.
FIG. 2 is a schematic block diagram showing the mixing of a channelization code and scrambling code for the UMTS and CDMA system of FIG. 1.
FIG. 3 shows a QPSK constellation for two antennas in a simple transmission scheme.
FIG. 4 is a block diagram showing the weights chosen to optimize the signal-to-noise ratio at the receiver of the system of FIG. 1.
FIG. 5 is a table showing the amplitude and phase of the weights of FIG. 4.
FIG. 6 is a table showing a transmission table for a single user using multi-carrier without an additional Walsh code.
FIG. 7 illustrates a transmission matrix with an extended Walsh code.
FIG. 8 is a transmission matrix of a 4x4 matrix with three complex variables such as for multiple antennas.

FIG. 9 is a similar transmission matrix which guarantees orthogonality.

FIG. 10 is a transmission matrix having four-fold diversity prior to decoding.

FIG. 11 is a table showing the complexity difference between space-time diversity and OTD 1X receivers and operations per frame.

FIG. 12 is an overview of a space-time transmit diversity scheme.

FIG. 13 are equations showing diversity receiving at mobiles.

FIG. 14 is a block diagram showing a polarization interleave switch beam structure of the present invention.

FIG. 15 is a graph showing the combined space-time block code to antenna switch beams.

FIGS. 16 and 17 are tables showing performance analysis.

## Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

The present invention is advantageous and provides a smart antenna, which applies a space-time transmit diversity (STTD) scheme to angular and temporary transmit diversity to combine with the polarization interleaved switch beam (SWB-ATTD) to enhance the downlink Wideband Code Division Multiple Access (WCDMA) performance. The angular temporary transmit diversity and polarization interleaved switch beam is specially designed for multiple arrival and wide angle spread (urban) environments. In such an environment, the method of the invention transfers the aperture gain to diversity gain by dividing different angle of departure with different space-time spreading. The proposed switch beamformer preserves the aperture gain in time-resolvable arrival air interface, which is a typical WCDMA channel environment. It is possible to obtain an average 2-3 dB better than the steering space-time diversity and 6 dB superior achievement to single omni-transmit antenna in wide angle spread and rich multipath (urban) environments. The smart antenna of the present invention does not require per user's pilot and transceiver calibration at the base station for implementing beamformers. The interleaved polarization switch beam structure increases receiving diversity in the uplink traffic.

For purposes of understanding, a brief description of transmit diversity applications in wideband code division multiple access systems and closed/open loop transmit diversity with space-time spreading Walsh code application and antenna options are first described.

The third generation cellular system, known as the Universal Mobile Telecommunications System (UMTS), is currently becoming standardized throughout Europe. It is designed to offer flexibility and advantages in wideband services over the present cellular systems, with various data rates as high as 2 Mb/s. UMTS is based on a Wideband Code Division Multiple access (WCDMA) physical layer structure. To improve capacity, antenna diversity has been addressed by may engineers. It has been found that for the purpose of low cost/size of a mobile terminal, receiver antenna arrays are not desirable in the downlink. It is possible to obtain the same performance gain by using multiple transmit antennas, and thus, transmit diversity (TD) has been used.

In UMTS, control channels are primarily encoded, while data channels are protected with a channel code. As known to those skilled in the art, it is possible to derive an expression for the bit-error rate (BER) in an encoded case.

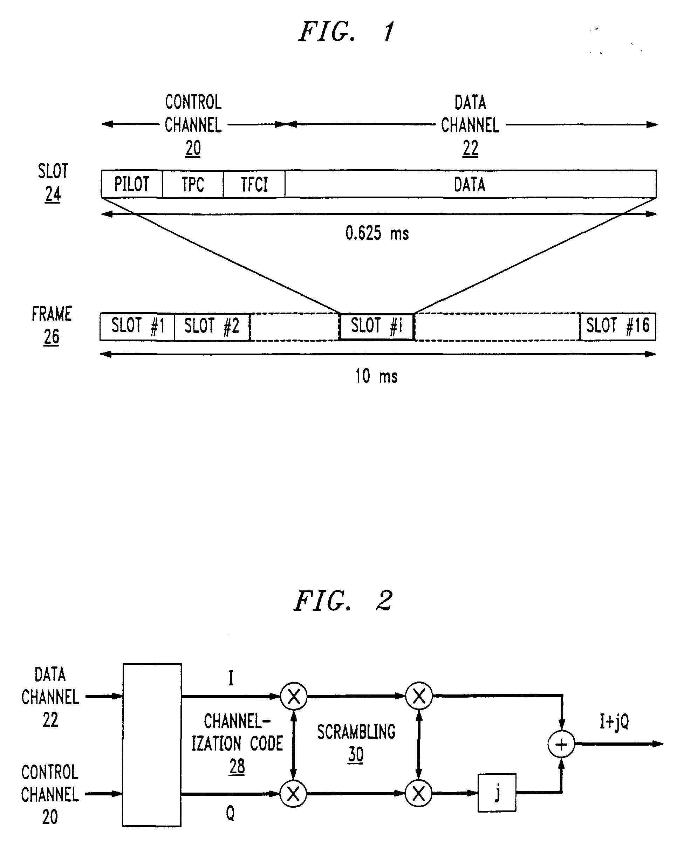

In its typical application, UMTS is a wideband CDMA system with a five MHz bandwidth and 4.096 Mchip/s. It has variable spreading factors and can use multicode (several spreading codes are assigned to a user) to support variable bit-rates. The physical channels in the downlink are divided into one control channel **20,** and one data channel **22,** which are time-multiplexed. The slot and frame structure **24,26** for the downlink is shown in FIG. 1. The spreading is performed using a channelization code **28** and a scrambling code **30** (FIG. 2). The former is an Orthogonal Variable Spreading Factor (OVSF), which are Walsh-Hadamard codes of different lengths, and the latter is a 40960 chip (10 ms) segment of a $2^{18} - 1$ Gold code. The pulse shaping not shown in FIG. 2, is square-root raised cosine and the modulation is quadrature phase shift keying (QPSK).

There are currently two types of antenna transmit diversity (TD) proposals for UMTS: (1) open loop and (2) closed loop.

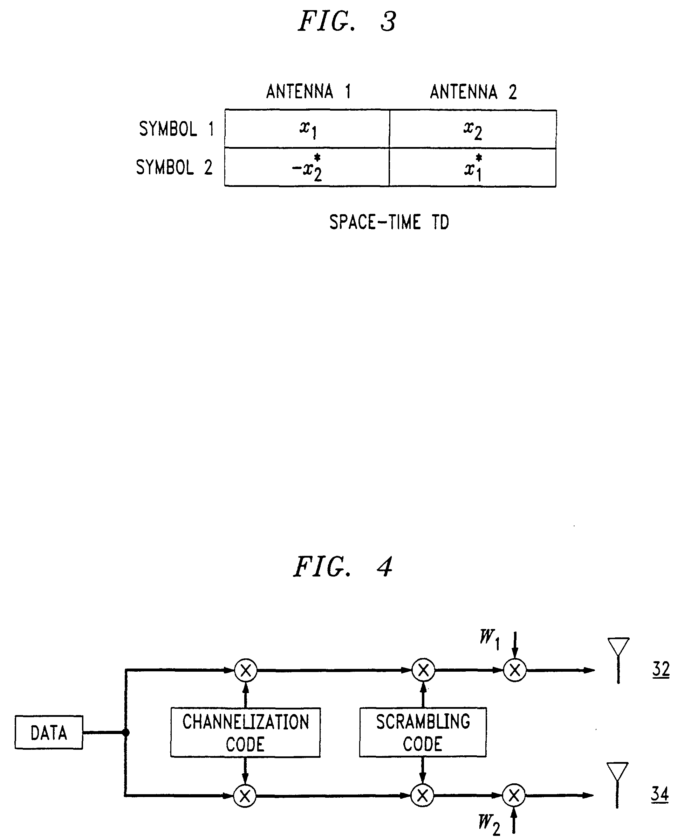

In the open loop scheme, the transmitter has no knowledge of the channels. To maximize the diversity, a space-time block code is used. This simple transmission scheme is shown in the table of FIG. 3, where $\square_1, \square_2$ belongs to a QPSK constellation. In a multipath channel with L resolvable paths, the received signal for the two symbols are:

$$r_1(t) = \sum_{k=1}^{L} h_{1,k}\, x_1\, s(t-\square_k) + h_{2,k}\, x_2\, s(t-\square_k) + n_1(t)$$

$$r_2(t) = \sum_{k=1}^{L} -h_{1,k}\, x^*_2\, s(t-\square_k) + h_{2,k}\, x^*_1\, s(t - D_k)$$

+ n sub 2 (t)

where s(t) is the spreading sequence. The outputs of rake finger k are:

$$R_{1,k} = \int r_1(t)s^*(t-\tau_k)dt = h_{1,k} x_1 + h_{2,k} x_2 + n_{1,k}$$
$$R_{2,k} = \int r_2(t)s^*(t-\tau_k)dt = - h_{1,k} x^*_2 + h_{2,k} x^*_1 + n_{2,k}$$

and maximum likelihood estimation becomes:

$$x_1 =$$
$$\text{sum from } \{k=1\} \text{ to } L h^*_{1,k} r_{1,k} + h_{2,k}r^*_{2,k} =$$
$$\text{sum from } \{k=1\} \text{ to } L(|h_{1,k}|^2 + |h_{2,k}|^2)x_1 + \tilde{n}_1$$
$$x_2 =$$
$$\text{sum from } \{k=1\} \text{ to } L h^*_{2,k} r_{1,k} - h_{1,k}r^*_{2,k} =$$
$$\text{sum from } \{k=1\} \text{ to } L(|h_{1,k}|^2 + |h_{2,k}|^2)x_2 + \tilde{n}_2$$

Hence, there will be 2L branch diversity. One advantage of this scheme is that the power between the two antennas is balanced, i.e, they are always the same.

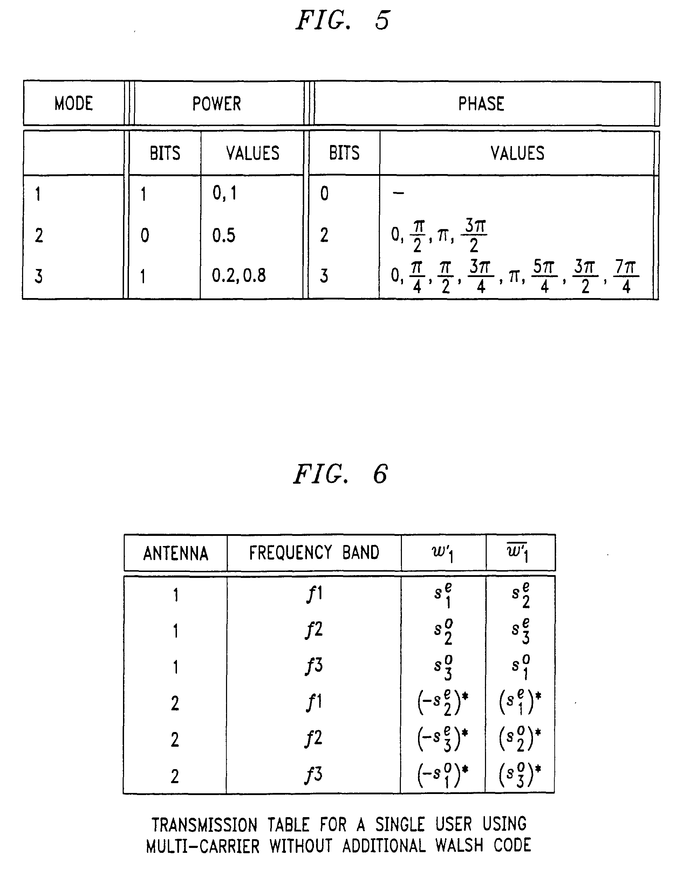

In the closed loop transmit diversity scheme, the communications system transmits on both antennas **32,34** simultaneously, but with weights chosen to optimize the signal-to-noise ratio at the receiver (FIG. 4). Data **36** is forwarded with appropriate mixing with channelization code **28** and scrambling code **30.** The weights $w_1$ an $w_2$ are determined by the mobile and transmitted back to the base station. Three modes of feedback have been proposed with one, two and four bits respectively. These bits determine the amplitude and phase of the weights seen in the mode table of FIG. 5.

Mode 1 is selection diversity. The transmitter chooses the best antenna and transmits only on that one. Modes 2 and 3 are quantized version of the optimal weights. A special case of unquantized weights is feasible and assuming that the weights can be chosen with infinite precision, it is possible to calculate an analytical expression of the bit error rate (BER).

In a received signal with weighted transmission, the rake finger outputs and the maximum ratio combining (MRC) output can also be calculated.

$$r(t)=$$
$$\text{sum from } \{k=1\} \text{ to } L w_1 h_{1,k} \ xs(t-\tau_k)+$$
$$\text{sum from } \{k=1\} \text{ to } L w_2 h_{2,k} \ xs(t-\tau_k)+ n(t)$$
$$r_k = \int r(t)s^*(t-\tau_k) \ dt = w_1 h_{1,k}x + w_2 h_{2,k}x + n_k$$
$$x=$$
$$\text{sum from } \{k=1\} \text{ to } L (w_1 h_{1,k}+w_2 h_{2,k})^* r_k=$$
$$\text{sum from } \{k=1\} \text{ to } L|w_1 h_{1,k}+w_2 h_{2,k}|^2 \ x+ (w_1 h_{1,k}+w_2 h_{2,k})n_k$$

The equivalent channel is $h_k=w_1 h_{1,k}+w_2 h_{2,k}$ and the objective is to choose the weights such that this channel has maximum power.

In order to estimate the channels, orthogonal pilot sequences are transmitted in every slot (even in mode 1). When there is a feedback bit rate of about 1600 bit/s, the weight update rate is 1600, 800 and 400 Hz, respectively, for modes 1, 2 and 3.

To analyze the performance, the following channel model is possible.

$$h(\tau;t)=$$
$$\text{sum from } \{k=0\} \text{ to } \{L-1\} \ a_k(t)\delta(\tau-\tau_k)$$

where the path amplitudes ak(t) are independently fading. Furthermore, the channels for the two antennas are independent with the same average path powers, $E[|a_k|^2]$, and delays, $\tau_k$. In the rake receiver, it can be assumed there is perfect dispreading, and any self interference can be ignored.

There will be a 2L path diversity for space-time transmit/diversty. The average signal to noise ratio on these paths are $\gamma_1, \gamma_1, \gamma_2, \gamma_2, ..., \gamma_L, \gamma_L$, assuming the two channels are identical on average. Furthermore, there is a 3 dB penalty because the transmit power is shared between the two antennas.

Orthogonal Transmit Diversity (OTD) is one method of obtaining downlink diversity without the drawbacks of mobile handset antenna diversity or multiple carrier or delay diversity. It takes an advantage of the decoding process when error correction codes are used. Orthogonal transmit diversity (OTD) is part of the current IS-2000 proposal known to those skilled in the art, and achieves diversity in the Viterbi decoder path metrics. OTD transmits alternate bits on different antennas. Even bits are transmitted on antenna 0 using one Walsh code, and odd bits are transmitted on antenna 1 using another Walsh code. In the IS-2000 standard, these codes are closely related. If, for example, a user $i$ is assigned a Walsh code, $w_i^N(t)$, of length $N$ in non-diversity mode, then the user $i$ would be assigned two codes which are formed from $w_i^N(t)$ in the optional OTD mode. These two codes are formed as follows:

$$w_i^{2N}(t) = [w_i^N(t) \ w_i^N(t)]$$
$$w_{i+N}^{2N}(t) = [w_i^N(t) \ -w_i^N(t)]$$

where the code length has increased to 2N (reflected in the superscript) and there are now 2N possible codes (reflected in the subscript). Further, the second code $w_{i+N}^{2N}(t)$ is often referred to as the complementary code of $w_i^{2N}(t)$. Although the Walsh codes are extended, the overall data rate remains unchanged from the non-diversity mode. Each code or antenna carries one-half the original data.

By transmitting the even and odd data on different antennas, a form of diversity gain is obtained in Rayleigh fading conditions because the Viterbi decoder creates path metrics which are based on several consecutive bits after de-interleaving. Because alternate bits are transmitted from one of two antennas, the path metrics will inherently contain diversity. The diversity gain is a function of the strength of the code. The more powerful the code, the closer the performance will be to a diversity scheme which obtains diversity on each symbol. At low Dopplers and for powerful codes (R=1/4 convolutional), the gains over no diversity can be dramatic. This scheme, however, is code dependent and low rate codes (R=1/2 convolutional) do not benefit as greatly from this scheme.

Space-time coding, on the other hand, can add diversity on the downlink without requiring an additional receive antenna, wasting bandwidth, or causing self-interference, and it is not dependent on the error correction code that is used. By coding over antennas and time in a particular way, diversity performance can be achieved without self-interference or extra bandwidth. This concept can be extended to the idea of Walsh coding, i.e., referred to as space-Walsh diversity or space-time spreading as used hereafter.

Space-time spreading may be readily implemented within the broad framework of the known IS-2000 system. Currently, the IS-2000 proposal supports two chip rates for signals, i.e., 1.2288 MHz (1X), and 3.6864 MHz (3X). The IX system is designed as a direct replacement for IS-95B systems, and has overlay capability. The 3X system supports higher data rates, and for the forward link only, supports a multiple carrier format, where each carrier has 1.2288 MHz chip rate. It also has overlay capability.

Currently, OTD is supported as an option within IS-2000. Thus, to make the inclusion of space-time spreading in IS-2000 straightforward, it is formulated in a manner which is similar to OTD.

Using the OTD framework specified in the IS-2000 proposal, space-time spreading can be readily applied to the system. Space-time spreading would require the sharing of spreading codes (i.e., two users share the use of two Walsh codes). Implementing space-time spreading in this fashion, however, is undesirable. First, the sharing of codes could cause problems if the transmit powers to the two users sharing Walsh codes were radically different. In such a case, imperfect channel estimation could result in significant cross terms. Additionally, OTD uses extended Walsh codes, which eliminate the need for code sharing and maximize the commonality with OTD within the standard. This requires fewer changes to the standard.

One main difference between space-time spreading and OTD is in the mapping of data onto the transmit diversity antennas.

As noted before, space-time spreading is readily implemented with few changes to an OTD framework. Because each user is assigned two extended Walsh codes (formed from a single non-extended Walsh code), and the data is partitioned into two streams, the diversity scheme may be applied to the two streams as if they were two different users. On the first antenna, the system would transmit:

$$x_1(t) = \sqrt{P/2}\,[s_e(t)w(t) - s_o(t)^*\bar{w}(t)]\,p(t)$$

where P represents the total transmit power, $s_e(t) = Y_{I1} + Y_{Q1}$ is the even symbol stream, and $s_o(t) = Y_{I2} + Y_{Q2}$ is odd symbol stream. The Walsh code w(t) and its complement are used to spread the signal and are extended Walsh codes.

More importantly, it is possible to provide four-fold diversity at the encoded symbol level by assigning an extra Walsh code to a user, which will not cause cross-interference with other users regardless of channel estimation accuracy. These gains could be significant for users which have low $I_{OR}/I_{OC}$[7] values. Ordinarily, these users would be in a soft handoff. If the resources do not exist in the adjacent cell to support this user, then the use of additional Walsh resources on a per user basis may be appropriate.

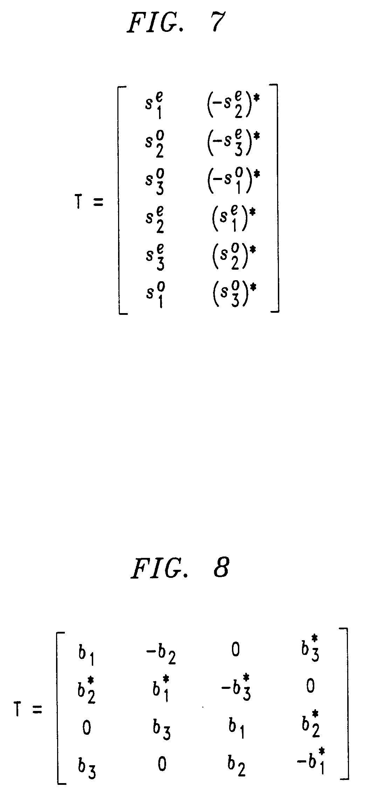

If sacrificing an additional Walsh code is not desirable, it is possible to obtain diversity prior to the decoder in a multi-carrier system. Each symbol is sent four times (thus four-fold diversity). Instead of using an extra code, a single Walsh code is extended and each symbol sent twice. Each data stream $s_i$ would then be split into two data streams $s^e_i$ and $s^o_i$ (even and odd). Instead of transmitting each signal four times, it is possible to transmit each signal twice, thus obtaining two-fold diversity, as shown in the table of FIG. 6. Equivalently, it is possible to use the transmission matrix notation developed to yield the transmission matrix of FIG. 7. The transmission matrix is an established type of matrix. The rows can represent Walsh codes (orthogonal channels) (non-orthogonal channels).

There are many possible assignments of bits to corresponding Walsh codes, antennas and carriers. Each will probably not differ significantly in terms of performance.

This transmission scheme will lead to a combining method, which is similar to the four-fold diversity case with the exception that only two Walsh outputs are used per decision statistic, and it will only yield a two-fold diversity improvement.

Unfortunately, a full-rate orthogonal design for a four antenna/channel system with complex signaling (e.g., QPSK modulation 1X system) does not exist. It is possible, however, to to obtain diversity improvement using space-time spreading with four antennas.

A modified transmission matrix for three antennas is possible. To allow four transmit antennas, the Walsh code is extended for a particular user twice, to obtain four Walsh codes with four times the length.

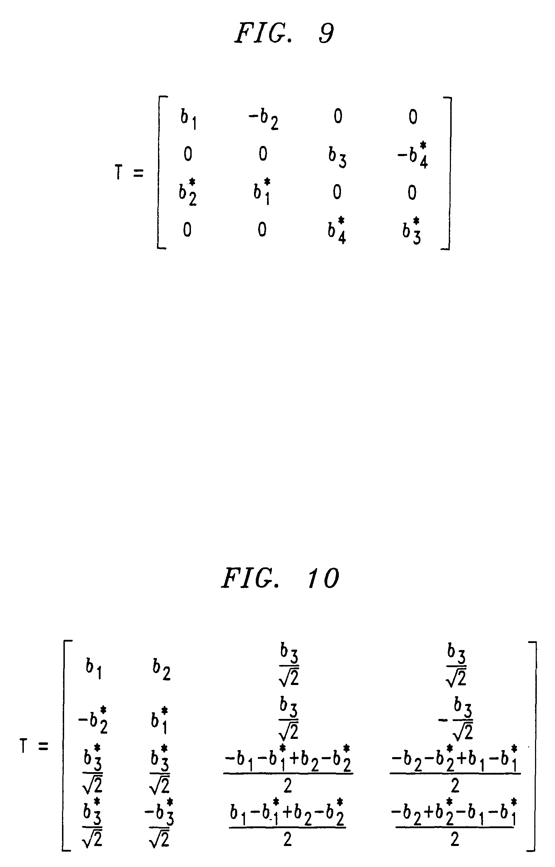

With a four-fold matrix extension, it is possible to have no code sharing. To obtain a transmission matrix, an orthogonal matrix with four columns and thus at least four rows is required. While a 4x4 orthogonal matrix with four complex variables does not exist, a 4x4 matrix with three complex variables does exist. One such transmission matrix is shown in FIG. 8.

For the matrix in FIG. 8, $H(t)H = (|h_1|^2 + |h_2|^2 + |h_3|^2 + |h_4|^2)I$. This achieves four-fold diversity. In order to achieve this, however, the data rate must be reduced to three-fourths the original rate. This can be seen by noticing that while it is possible to use four codes (i.e., the rows of T), it is only possible to transmit three symbols.

A second option for using four transmit antennas without reducing the data rate is to use the transmission matrix as shown in FIG. 9.

This matrix guarantees orthogonality, but only achieves two-fold diversity before the decoder. If the interleaving is done correctly, however, the metrics are:

$$b_1(\Box h_1 \Box^2 + \Box h_2 \Box^2), b_2(\Box h^3 \Box^2 + \Box h_4 \Box^2), b_3(\Box h_1 \Box^2 + \Box h_2 \Box^2),$$
$$b_4(\Box h_3 \Box^2 + \Box h_4 \Box^2), ...$$

While two-fold diversity is achieved prior to decoding, the Viterbi decoder can see up to four-fold diversity due to the path metrics. The decoder achieves the diversity gain from two to four, without data rate loss. As in OTD, the gains are dependent on the strength of the error correction code.

The last option is similar to option 1 and uses an orthogonal design. The transmisson matrix is shown in FIG. 10. This option also achieves four-fold diversity prior to decoding, but also suffers from a 25% loss in data rate. This allows all four codes to be used on all four antennas.

A major difference between OTD and space-time spreading in the mobile receiver is in the baseband receiver functions. All other components remain the same. The baseband receiver performs complex code uncovering, Walsh despreading, channel estimation, channel compensation, multiplexing/de-interleaving, and Viterbi decoding.

This complex uncovering requires a multiplication for each sample of the I&Q streams for all fingers for each of the early, late and on-time samples. Assuming eight samples per chip and three fingers, this results in approximately $3.5 \cdot 10^6$ operations per frame. The Walsh uncovering then requires approximately $9 \cdot 10^5$ operations per frame. Neither of these operation counts depends on the diversity scheme used.

Modeling channel estimation as a simple PCG average for each of two Walsh codes (one per transmit antenna) results in approximately $9 \cdot 10^5$ operations per frame. Channel compensation will depend on the data rate and requires about $5.5 \cdot 10^4$ N operations per frame for OTD, where N is a scale factor that increases with data rate (N=1 for voice). Space-time spreading is twice as complex as OTD in this one area.

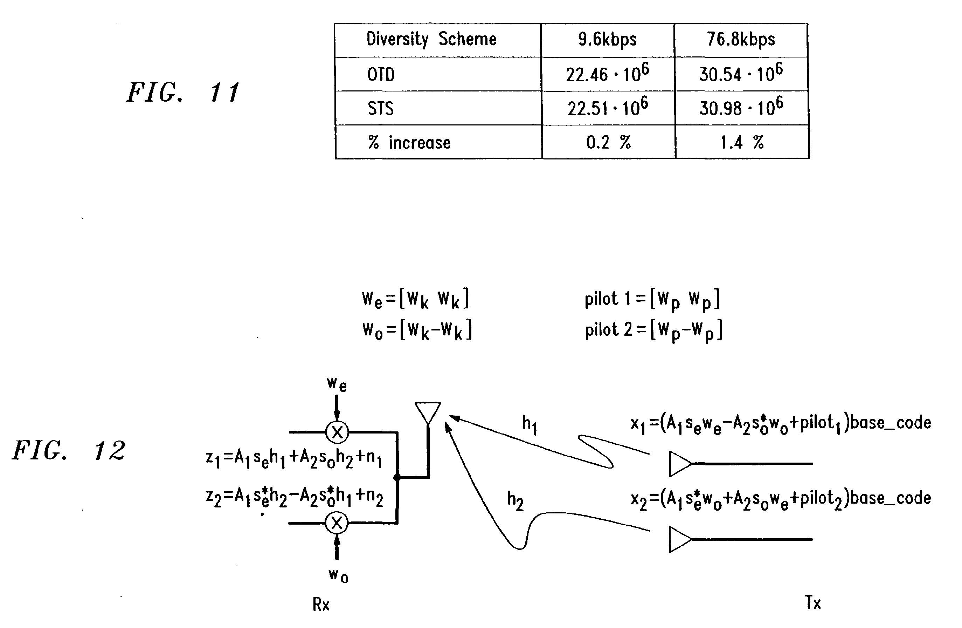

The Viterbi decoding complexity also depends on the data rate and code rate. For RC4 the Viterbi decoding requires roughly $1.1 \cdot 10^6$ N operations pre frame. In addition to the detection and decoding functions, the receiver must perform searcher functions to track multipath. The searcher requires $16 \cdot 10^6$ operations per frame. The total operation count for both OTD and space-time spreading at data rates of 9.6 kbps and 76.8 kbps are shown in the table of FIG. 11. As can be seen, the complexity increase (0.2% for voice, 1.4% for 76.8 kbps) is extremely minor.

Space-time spreading offers significant performance gains over OTD. Space-time spreading outperforms OTD for all cases, primarily because it provides diversity prior to the decoding process while OTD relies on the Viterbi decoder. For R=1/2 convolutional codes at low speed, the performance gains are large (5 dB to 8 dB) for fundamental channels. For R=1/2 convolutional codes for all other speeds, the performance gains are significant for fundamental, supplemental and common channels (1 dB to 3 dB). Further, the gains of space-time spreading over no diversity are dramatic while the gains of OTD over no diversity are moderate to small with rate 1/2 coding. The performance gains of space-time spreading over OTD are more modest when 1/4 rate coding is used with gains ranging from 0.3dB to 0.7dB. Both space-time spreading and OTD offer large gains over no transmit diversity.

Space-time spreading offers more flexibility in choice of radio configuration. STS makes the capacity of RC3 with OTD (R=1/4) and RC4 with STS (R=1/2) approximately equal. Additionally, space-time spreading does not introduce significant computational complexity and both space-time spreading and OTD can be supported in the mobile and base station with relatively minor adjustments.

The present invention uses the advantages of space-time spreading. In accordance with the present invention, a smart antenna is based on the switch beam and space-time spreading. Space-time spreading implements the space-time block code to different transmit antennas, which have potentially independent channels to the mobile. The signals transmitted at antenna $x_1$ and $x_2$ can be written as follows:

$$x_1 = (A_1 s_e w_e - A_2 s^*_o w_o + pilot_1) base\_code$$
$$x_2 = (A_1 s^*_e w_o + A_2 s_o w_e + pilot_2) base\_code$$

where A and pilot denote amplitude and common pilot channel, $s_e$ and $s_o$ denote even and odd bits in bit sequence, and $w_e$ and $w_o$ denotes the mutually orthogonal extended Walsh code for even and odd bits. That is:

$$w_e = [ w_k\ w_k ]$$
$$w_o = [ w_k\ -w_k ]$$

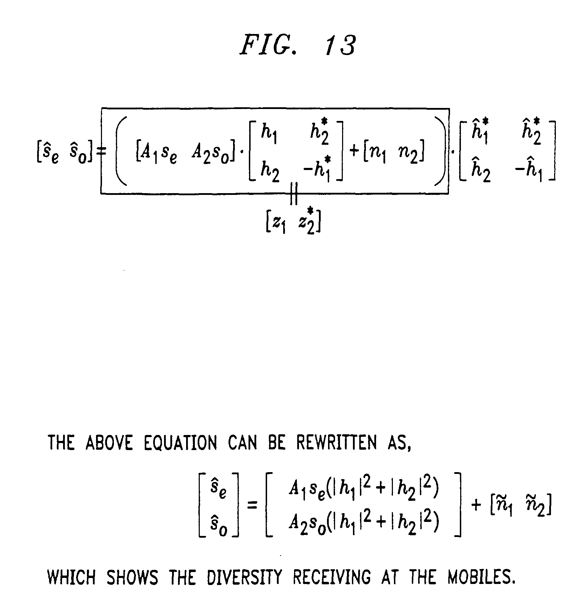

where $w_k$ is the Walsh code for the *k*th user. The transmitted signals are summed up in the air. The received signals are separately multiplied by the extended Walsh code $w_e$ and $w_o$ to obtain $z_1$ and $z_2$ a shown in FIG. 12. The above two outputs can be combined by applying the channel coefficients, which are estimated from common pilots, as shown in FIG. 13.

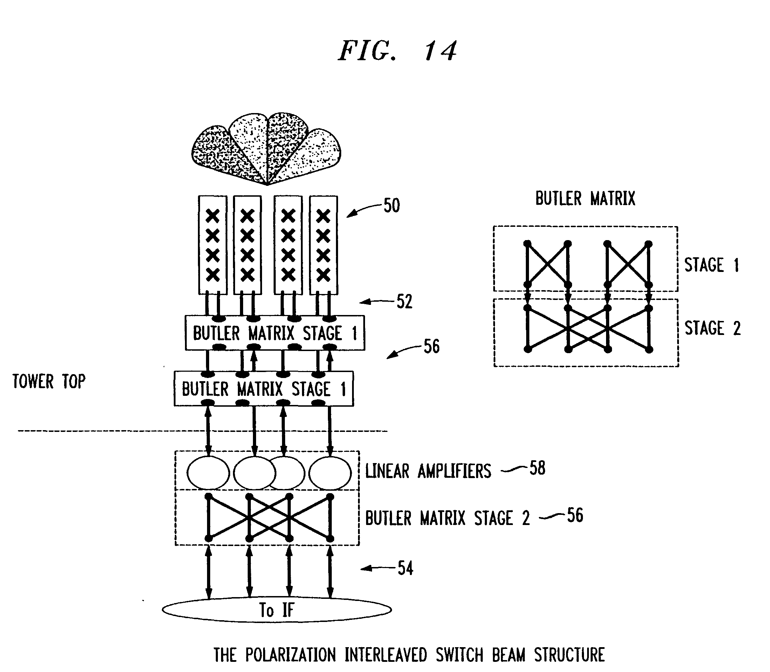

FIG. 14 shows the proposed antenna structure for polarization interleaved switch beam with angular and temporary transmit diversity. A positive and negative **45**☐oriented polarization phased array **50** is implemented at the tower top. There are a total of eight branches **52** of antennas: four branches for +45☐ polarization, and four branches for -45☐ polarization. Four cables are required by implementing polarization interleaved switch beams so there are only four I/O ports **54** at the base station for each sector. The Butler matrix **56** is divided into two stages and sandwiches the power amplifiers **58**. This structure not only reduces the insertion loss of the Butler matrix after power amplifiers, but evenly loads the power amplifiers for a specific switch beam.

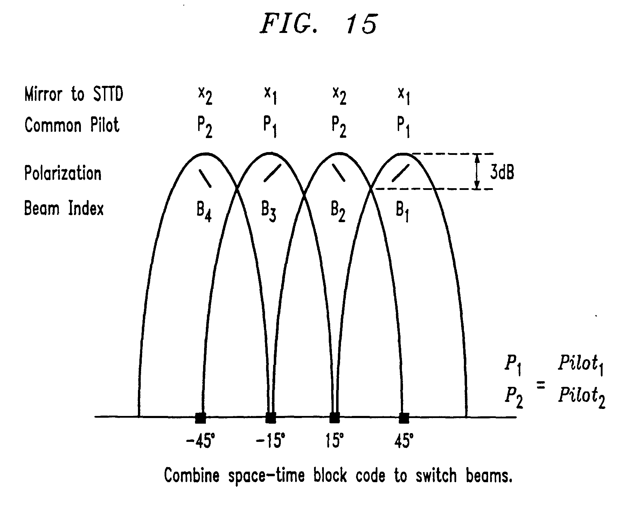

FIG. 15 shows the arrangement of the space-time spreading and the common pilot tone of the smart antenna shown in FIG. 14. The overlapped region for any adjacent beams is 3 dB lower from the top of the beam. Each adjacent beam has different polarization so polarization diversity gain will be observed in the overlapped region. The interleaved polarization structure does not improve the downlink approach. The adjacent beams are orthogonal to each other by applying the space-time block code.

The chip rate of UMTS is very high (3.86 Mchip per second) so the relative arrival delay of each propagation ray can exceed one chip's duration. Such a multiple arrival in time domain creates diversity receiving at mobiles even though one transmit antenna is used. Therefore, adding another transmit antenna/diversity does not have significant performance gain as aforementioned (1-3 dB). On the other hand, beamforming gain is not affected by multipath delay. But beamforming gain can be reduced by the propagation angle spread observed at the base stations.

The steering space-time transmit diversity scheme of the present invention improves the downlink capacity when four branches of transmitting antennas are used. Two groups of two-element phased array (☐/2 spacing) are placed 10 ☐ apart to have a 3 dB beamformer and two-way spatial diversity. The beamforming gain can be reduced in wide angle spread because of mismatch in the beamformer's aiming angle as well as distortion in the pilot tone's phase. The ST-STTD creates two-way spatial diversity at all times with an occasionally maximum 3 dB beamforming gain, which can be reduced by pilot and aiming mismatch. The diversity transmitting has higher priority than the beamformer in this scheme.

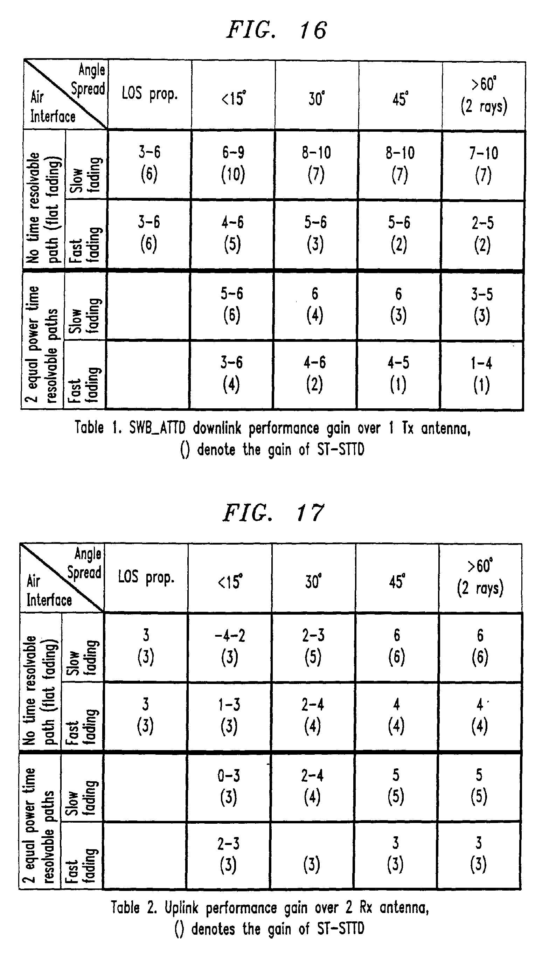

The polarization interleaved switch beam with angular and temporary transmit diversity method of the present invention combines two-way transmit diversity with different polarization interleaved switch beam. The beamforming gain is equal to 6 dB divided by the number of beam implemented to fulfill the angle spread. The diversity comes from the different angle of departure plus the antenna polarization. Polarization interleaved switch beam with angular and temporary transmit diversity preserves the aperture gain as best it can while the transmit diversity does not exist at all time. The beamformer gain is placed at higher priority than the transmit diversity gain in this method. Because the multipath arrival in WCDMA can reduce the transmit diversity gain over one antenna, this method has better performance than the steering space-time transmit diversity method. Performance analysis is shown in Tables 1 and 2 (FIGS. 15 and 16).

Many modifications and other embodiments of the invention will come to the mind of one skilled in the art having the benefit of the teachings presented in the foregoing descriptions and the associated drawings. Therefore, it is to be understood that the invention is not to be limited to the specific embodiments disclosed, and that the modifications and embodiments are intended to be included within the scope of the dependent claims.

## Claims

1. A method for enhancing the communication signal within a wideband code division multiple access mobile communications system using space-time diversity comprising the step of:

   transferring the operative gain of an antenna structure to diversity gain by dividing a different angle of departure with different space-time spreading.

2. A method for enhancing the communication signal within a wideband code division multiple access communications system using space-time diversity comprising the step of:

   transferring the operative gain of a switch beamformer antenna structure to diversity gain by dividing a different angle of departure with different space-time spreading; and
   mismatching an aiming angle of the switch beamformer antenna structure and distorting the phase of a pilot tone for reducing beamformer gain within a side angle spread.

3. A method according to Claim 1 or 2, and comprising the step of imparting a spreading function to the communications signal using mutually orthogonal extended Walsh codes for even and odd bits of data.

4. A method according to Claim 3, wherein the extended Walsh codes are formed from a single non-extended Walsh code.

5. A method according to Claim 3, and comprising the step of receiving the communication signal within a mobile communications unit and separately multiplying the received communication signal by the extended Walsh codes.

**6.**   A method according to Claim 5, and comprising the step of estimating channel coefficients from common pilot signals and combining the output of the multiplying of the received signals by applying the channel coefficients.

**7.**   A method according to Claim 5, and comprising the step of estimating channel coefficients from common pilot signals and combining the output of the previous multiplication step of the received signals by applying the channel coefficients.

**8.**   A method according to Claim 1, and comprising the step of preserving the aperture gain in a time-resolvable arrival air interface with a switch beamformer antenna structure.

**9.**   A method according to Claim 2, and comprising the step of preserving the aperture gain in a time-resolvable arrival air interface with the switch beamformer antenna structure.

**10.**   A method according to Claim 2 or 8, and comprising the step of using four branches of the switch beam former antenna structure with two groups of two-element phased array and two-way spatial diversity.

**11.**   A method according to Claim 10, and comprising the step of mismatching a beamformer's aiming angle and distorting the phase of a pilot tone for reducing beamforming gain within a side angle spread.

**12.**   A method according to Claim 2 or 10, and comprising the step of placing beam former gain at higher priority than transmit diversity gain.

## FIG. 1

CONTROL CHANNEL 20

DATA CHANNEL 22

SLOT 24

| PILOT | TPC | TFCI | DATA |
|-------|-----|------|------|

0.625 ms

FRAME 26

| SLOT #1 | SLOT #2 | | SLOT #i | | SLOT #16 |
|---------|---------|--|---------|--|----------|

10 ms

## FIG. 2

DATA CHANNEL 22

CONTROL CHANNEL 20

CHANNELIZATION CODE 28

I

Q

SCRAMBLING 30

j

I+jQ

## FIG. 3

| | ANTENNA 1 | ANTENNA 2 |
|---|---|---|
| SYMBOL 1 | $x_1$ | $x_2$ |
| SYMBOL 2 | $-x_2^*$ | $x_1^*$ |

SPACE-TIME TD

## FIG. 4

DATA

CHANNELIZATION CODE

SCRAMBLING CODE

$W_1$

$W_2$

32

34

## FIG. 5

| MODE | POWER | | PHASE | |
|---|---|---|---|---|
| | BITS | VALUES | BITS | VALUES |
| 1 | 1 | 0, 1 | 0 | — |
| 2 | 0 | 0.5 | 2 | $0, \dfrac{\pi}{2}, \pi, \dfrac{3\pi}{2}$ |
| 3 | 1 | 0.2, 0.8 | 3 | $0, \dfrac{\pi}{4}, \dfrac{\pi}{2}, \dfrac{3\pi}{4}, \pi, \dfrac{5\pi}{4}, \dfrac{3\pi}{2}, \dfrac{7\pi}{4}$ |

## FIG. 6

| ANTENNA | FREQUENCY BAND | $w'_1$ | $\overline{w'_1}$ |
|---|---|---|---|
| 1 | $f1$ | $s_1^e$ | $s_2^e$ |
| 1 | $f2$ | $s_2^o$ | $s_3^e$ |
| 1 | $f3$ | $s_3^o$ | $s_1^o$ |
| 2 | $f1$ | $(-s_2^e)^*$ | $(s_1^e)^*$ |
| 2 | $f2$ | $(-s_3^e)^*$ | $(s_2^o)^*$ |
| 2 | $f3$ | $(-s_1^o)^*$ | $(s_3^o)^*$ |

TRANSMISSION TABLE FOR A SINGLE USER USING
MULTI-CARRIER WITHOUT ADDITIONAL WALSH CODE

*FIG. 7*

$$T = \begin{bmatrix} s_1^e & (-s_2^e)^* \\ s_2^o & (-s_3^e)^* \\ s_3^o & (-s_1^o)^* \\ s_2^e & (s_1^e)^* \\ s_3^e & (s_2^o)^* \\ s_1^o & (s_3^o)^* \end{bmatrix}$$

*FIG. 8*

$$T = \begin{bmatrix} b_1 & -b_2 & 0 & b_3^* \\ b_2^* & b_1^* & -b_3^* & 0 \\ 0 & b_3 & b_1 & b_2^* \\ b_3 & 0 & b_2 & -b_1^* \end{bmatrix}$$

*FIG. 9*

$$T = \begin{bmatrix} b_1 & -b_2 & 0 & 0 \\ 0 & 0 & b_3 & -b_4^* \\ b_2^* & b_1^* & 0 & 0 \\ 0 & 0 & b_4^* & b_3^* \end{bmatrix}$$

*FIG. 10*

$$T = \begin{bmatrix} b_1 & b_2 & \dfrac{b_3}{\sqrt{2}} & \dfrac{b_3}{\sqrt{2}} \\ -b_2^* & b_1^* & \dfrac{b_3}{\sqrt{2}} & -\dfrac{b_3}{\sqrt{2}} \\ \dfrac{b_3^*}{\sqrt{2}} & \dfrac{b_3^*}{\sqrt{2}} & \dfrac{-b_1-b_1^*+b_2-b_2^*}{2} & \dfrac{-b_2-b_2^*+b_1-b_1^*}{2} \\ \dfrac{b_3^*}{\sqrt{2}} & -\dfrac{b_3^*}{\sqrt{2}} & \dfrac{b_1-b_1^*+b_2-b_2^*}{2} & \dfrac{-b_2+b_2^*-b_1-b_1^*}{2} \end{bmatrix}$$

EP 1 182 799 A2

*FIG. 11*

| Diversity Scheme | 9.6kbps | 76.8kbps |
|---|---|---|
| OTD | $22.46 \cdot 10^6$ | $30.54 \cdot 10^6$ |
| STS | $22.51 \cdot 10^6$ | $30.98 \cdot 10^6$ |
| % increase | 0.2 % | 1.4 % |

$$w_e = [w_k \ \ w_k] \qquad \text{pilot } 1 = [w_p \ \ w_p]$$
$$w_o = [w_k -w_k] \qquad \text{pilot } 2 = [w_p -w_p]$$

*FIG. 12*

$w_e$

$z_1 = A_1 s_e h_1 + A_2 s_o h_2 + n_1$

$z_2 = A_1 s_e^* h_2 - A_2 s_o^* h_1 + n_2$

$w_o$

$h_1$

$h_2$

$x_1 = (A_1 s_e w_e - A_2 s_o^* w_o + \text{pilot}_1)\text{base\_code}$

$x_2 = (A_1 s_e^* w_o + A_2 s_o w_e + \text{pilot}_2)\text{base\_code}$

Rx

Tx

$$FIG.\ \ 13$$

$$[\hat{s}_e \ \hat{s}_0] = \left( [A_1 s_e \ A_2 s_0] \cdot \begin{bmatrix} h_1 & h_2^* \\ h_2 & -h_1^* \end{bmatrix} + [n_1 \ n_2] \right) \cdot \begin{bmatrix} \hat{h}_1^* & \hat{h}_2^* \\ \hat{h}_2 & -\hat{h}_1 \end{bmatrix}$$

$$\underbrace{\phantom{xxxxxxxxxxxxx}}_{[z_1 \ z_2^*]}$$

THE ABOVE EQUATION CAN BE REWRITTEN AS,

$$\begin{bmatrix} \hat{s}_e \\ \hat{s}_0 \end{bmatrix} = \begin{bmatrix} A_1 s_e(|h_1|^2 + |h_2|^2) \\ A_2 s_0(|h_1|^2 + |h_2|^2) \end{bmatrix} + [\tilde{n}_1 \ \tilde{n}_2]$$

WHICH SHOWS THE DIVERSITY RECEIVING AT THE MOBILES.

FIG. 14

THE POLARIZATION INTERLEAVED SWITCH BEAM STRUCTURE

## FIG. 15

Mirror to STTD    $x_2$    $x_1$    $x_2$    $x_1$

Common Pilot    $P_2$    $P_1$    $P_2$    $P_1$

Polarization

Beam Index    $B_4$    $B_3$    $B_2$    $B_1$

3dB

−45°     −15°     15°     45°

$$\begin{aligned} P_1 \\ P_2 \end{aligned} = \begin{aligned} Pilot_1 \\ Pilot_2 \end{aligned}$$

Combine space−time block code to switch beams.

17

## FIG. 16

| Air Interface \ Angle Spread | | LOS prop. | <15° | 30° | 45° | >60° (2 rays) |
|---|---|---|---|---|---|---|
| No time resolvable path (flat fading) | Slow fading | 3-6 (6) | 6-9 (10) | 8-10 (7) | 8-10 (7) | 7-10 (7) |
| | Fast fading | 3-6 (6) | 4-6 (5) | 5-6 (3) | 5-6 (2) | 2-5 (2) |
| 2 equal power time resolvable paths | Slow fading | | 5-6 (6) | 6 (4) | 6 (3) | 3-5 (3) |
| | Fast fading | | 3-6 (4) | 4-6 (2) | 4-5 (1) | 1-4 (1) |

Table 1. SWB_ATTD downlink performance gain over 1 Tx antenna,
() denote the gain of ST-STTD

## FIG. 17

| Air Interface \ Angle Spread | | LOS prop. | <15° | 30° | 45° | >60° (2 rays) |
|---|---|---|---|---|---|---|
| No time resolvable path (flat fading) | Slow fading | 3 (3) | -4-2 (3) | 2-3 (5) | 6 (6) | 6 (6) |
| | Fast fading | 3 (3) | 1-3 (3) | 2-4 (4) | 4 (4) | 4 (4) |
| 2 equal power time resolvable paths | Slow fading | | 0-3 (3) | 2-4 (4) | 5 (5) | 5 (5) |
| | Fast fading | | 2-3 (3) | (3) | 3 (3) | 3 (3) |

Table 2. Uplink performance gain over 2 Rx antenna,
() denotes the gain of ST-STTD